Europäisches Patentamt

European Patent Office

Office européen des brevets

(11) Publication number: **0 170 299**
**B1**

(12) **EUROPEAN PATENT SPECIFICATION**

(45) Date of publication of patent specification: **17.01.90**

(21) Application number: **85200093.4**

(22) Date of filing: **29.01.85**

(51) Int. Cl.⁵: **C 01 B 33/26**

(54) **A rheological grade sepiolite product and processes for its manufacture.**

(30) Priority: **02.08.84 ES 534838**
**03.08.84 ES 534891**
**21.08.84 ES 535317**

(43) Date of publication of application:
**05.02.86 Bulletin 86/06**

(45) Publication of the grant of the patent:
**17.01.90 Bulletin 90/03**

(84) Designated Contracting States:
**AT BE CH DE FR GB IT LI LU NL SE**

(56) References cited:
**GB-A-2 114 107**

**CHEMICAL ABSTRACTS, vol. 103, no. 22, 2nd
December 1985, page 299, column 1, abstract
no. 182771c, Columbus, Ohio, US; A. ALVAREZ
BERENGUER et al.: "Additive for concrete and
its rheological characteristics", & ES - A - 521 131
(01-06-1984)**

**The file contains technical information
submitted after the application was filed and
not included in this specification**

(73) Proprietor: **TOLSA S.A., INDUSTRIAL
Nunez de Balboa 51
28001 Madrid (ES)**

(72) Inventor: **Alvarez Berenguer, Antonio
C/Fermin Caballero, 58
28034 Madrid (ES)**
Inventor: **Perez Castells, Rafael
C/Dr. Drumen, 6-3 Izquierda
28012 Madrid (ES)**
Inventor: **Aragon Martinez, Juan-José
Merida, 10-4 C.
Getafe/Madrid (ES)**
Inventor: **Esteban Aldezabal, Miguel-Angel
Avda. Rosario s/n Residencia Bulevar, 15
Torrelodones/Madrid (ES)**

(74) Representative: **Werner, Guy et al
Bugnion S.A. Case postale 375 10 Route de
Florissant
CH-1211 Genève 12 - Champel (CH)**

**Description**

Background of the invention

Sepiolite is a hydrous magnesium silicate with fibrous morphology. It can appear in two forms: alpha-Sepiolite or para-Sepiolite, appearing as long bundles of crystalline fibres, and beta-Sepiolite, appearing as amorphous aggregates or as small flat particles with rounded ends. Magnesium Sepiolite is the commonest, although there are too aluminium Sepiolites (Al occupying 19% of the octahedral positions), ferric Sepiolites (Xylotile), nickel-ferric Sepiolites (Falcondoite) and sodium Sepiolites (loughlinite).

Sepiolite particles have a needle-like morphology and naturally appear associated by strong bonds into fibrous bundles similar to those of hay, such as it can be seen through the electronic microscope. These associations may become dissociated for the obtention of a product having gel-forming properties.

Sepiolite belongs to the Paligorskite-Sepiolite group, wherein Attapulgite and Sepiolite are found. Both clays have a similar morphology. They can be used as thickening agents, as in the case of other clays, such as bentonites. With respect to these clays, which gel upon swelling, those of the Paligorskite-Sepiolite group have the advantage of forming stable gels in the presence of electrolytes.

Many processes for the obtention of Paligorskite-Sepiolites having gel-forming properties in aqueous media have been described, as in U.S. Patent No. 3,951,850, which describes the preparation of colloidal Attapulgite by hydrodinamic attrition, U.S. Patents Nos. 3,399,068 and 3,509,056, which describe the manufacture of colloidal grade Attapulgite using flocculating and dispersing systems.

Likewise, British Patent No. 2,114,107, of the present applicant, describes a process for the production of a concrete additive improving the fluidity properties thereof, which comprises the following steps: (a) selection of the sepiolite mineral by drilling before removal; (b) aeration for achieving a 30—40% humidity; (c) reduction up to a particle size of 3 mm; (d) drying by a rotary drum at 75—80°C until a humidity of 13—15%, and (e) screening until the 95% of particles range from 125 to 437 µm.

A similar process to the above one is described in Chem. Abstracts, Vol. *103*, No. 22, p. 299, 182771c (2nd Dec. 1985).

Description of the invention

The present invention refers to a processes for manufacturing a rheological grade sepiolite product according to the preamble of claim 1, 5 and 9, and to such a product.

It is the object of the present invention to provide a rheological grade sepiolite product that when dispersed in water forms a random network which traps the solvent, giving rise to high viscosity suspensions.

According to the invention this object is achieved by one of the processes indicated in the characterizing clause of claim 1, 5 or 9.

The product according to the invention is defined in claim 14.

As it can be easily seen by the descriptions of the processes according to the following items of this specification, the first part of the process according to British Patent No. 2,114,107, as aforesaid, referring to the selection, removal and milling of the mineral containing a 30—40% of humidity, is practically similar to the first part of the processes according to the present invention.

The process disclosed in the present invention, however, displays substantial differences with respect to that described in said British Patent. Thus, while in said British Patent the product is dried at 75—80°C and is then screened so to select a granulometric fraction to be used as concrete additive, in the process disclosed in the present patent, sepiolite is submitted to a further wet milling or wet kneading process in order to disagglomerate the sepiolite needle particle bundles and obtain a sepiolite product which, when dispersed into water, forms gels.

The product of this invention is a thickener, gellant, suspending agent having a Sepiolite content of at least 50%, essentially consisting of 62.0% $SiO_2$, 25.2% $MgO$, 1.2% $Al_2O_3$, 0.5% $Fe_2O_3$, 0.4% $CaO$, 0.3% $K_2O$, 0.1% $Na_2O$. The product of the invention is obtained from naturally occuring sepiolite by means of special physical processes, to be described which permit the bundles to be dissociated and the individual particles thereof to be separated, without affecting its acicular structure. The product can easily be dispersed in water or polar solvents, giving rise to high viscosity suspensions.

The rheological grade Sepiolite of this invention can have the form of a powder or "noodles" or "vermicelli". The noodle type product has a higher density, permitting a more economical transportation and a simpler handling. This product, when dispersed in water, produces particles having a size of less than 10 µm.

Table I summarises the most important characteristics of the product of the invention, in both presentation forms thereof:

EP 0 170 299 B1

TABLE I

| Appearance | Powder | Noodles |
|---|---|---|
| Moisture % | 4—7 | 10—12 |
| Apparent Density (g/l) | 80—100 | 430 |
| Absorption DOP (%) | 340—350 | 340—350 |
| Syneresis (%)(*) | 0 | 0 |
| pH | 8.5—9.0 | 8.5—9.0 |
| Colour | Off-white | Off-white |
| Brookfield viscosity at 5 rpm 25°C (Pa.s)(**) | 24.4 | 32.8 |
| Wet Granulometry (%) >37 μm | 0.0 | 0.0 |
| >20 μm | 0.5 | 0.5 |
| >10 μm | 5.0 | 5.0 |
| >5 μm | 6.0 | 6.0 |
| <5 μm | 88.5 | 88.5 |

(**) 6% Suspension stirred at 2700 rmp in COWLES for 30 mins.
(*) 3% Suspension stirred at 12,000 rmp in LOMI for 5 mins., measuring the syneresis after 72 hours.

The special characteristics of sepiolite are due to the peculiar acicular form of its particles. These, due to their structure, do not swell but have an elevated anisometry, so that when dispersed in water they form a random network which traps the solvent, giving rise to high viscosity suspensions. The structure is maintained due to the existence of electrostatic forces at the surface-edge, despite the fact that due to the low isomorphic substitution present in the sepiolite, it is not as important as in laminar silicates, and to the formation of hydrogen bridges through the —SiOH silanol groups of the sepiolite structure. The same anisometry of the particles also aids in maintaining the structure, preventing settling to a compact structure.

Apart from structuring the solvent, giving rise to high viscosity suspensions, the product of the invention proportions the medium with a rheologic or a characteristic flowing behaviour.

As indicated, the acicular particles of the sepiolite appear agglomerated forming large bundles similar to piles of hay. These bundles can easily be dispersed in water and other solvents having an average or high polarity, forming a random network of fibers which trap the liquid. When a suspension of the product is subjected to a shearing stress, a certain shearing stress value must necessarily be exceeded so that the suspension can flow. This shearing stress value or flowing limit is that necessary to break the formed structure. Above this flowing limit, the viscosity of the suspensions do not remain constant, but it is reduced with the shearing stress. Due to the existence of said flowing limit, the rheological grade sepiolite product of the invention can act as a suspending agent, preventing sedimentation of charges or pigments and due to the reduction in viscosity under stirring, it can be used as a thixotropic agent.

The viscosity of the solutions of the product of the invention increases rapidly with the concentration, and it is possible to obtain high viscosity suspensions at relatively low concentrations. The "noodle" shaped product gives rise to suspensions having a higher viscosity than the powdered product, since this has been subjected to a dry grinding process which can degrade the structure of the particles.

The viscosity of the suspensions is determined by the degree of dispersion or dissociation of the acicular fiber bundles in the solvent.

The degree of dispersion is determined by the energy applied to the system to overcome the force maintaining the fibers joined in bundles. This energy is mainly supplied by stirring and can be increased by raising the stirring time and/or speed.

The viscosity of the suspensions of the powdered product increases as the stirring time and/or speed increases, that is when the dispersion energy is increased. The noodle-shaped product has a similar behaviour except at low speeds (<1800 rpm) and short times (<35 minutes), since it requires a minimum energy to complete dispersion and to reach the maximum viscosity.

3

A determined viscosity can be obtained by adjusting the stirring speed or time, wherefore relatively high viscosities can be obtained at low speeds by merely increasing the stirring time.

The increase in temperature when preparing the suspension enhances the building up of the viscosity, wherefore a high viscosity can be obtained for the same stirring time and speed. However, the influence of this temperature factor in the preparation of the suspension is only slight, the maximum building up of the viscosity being obtained at a temperature of approximately 40°C, above which a reduction in the viscosity is observed.

Furthermore, it has been observed that the maximum viscosity is obtained at a pH of 7.5—8.5, precisely at which the product of the invention is buffered. Above a pH of 9, a reduction of the viscosity takes place until the total peptization is reached at a pH of 11.0—11.5. Likewise, below a pH of 4, a reduction in the viscosity takes place.

The product of the invention, unlike other commercial thickening agents, such as bentonite, gives rise to stable suspensions in media having a high electrolyte concentration, although these electrolytes can give rise to variations in the viscosity.

The product of the invention is a thickener, gellant for aqueous systems or organic solvents having a high or average polarity and polyfunctional solvents, such as glycols, polyalcohols, alkanol amines, plasticizers, etc.

Nevertheless due to the essentially hydrophilic nature of the surface of its particles, it is impossible to obtain stable suspensions in low polarity solvents, especially in aromatic media.

The processes for manufacturing rheological grade sepiolite of the invention will now be described.

Process I

A mineral selectively extracted with a sepiolite purity of more than 80% is used as the starting product. The calcite, dolomite, feldspar, quartz and mica contamination does not affect the properties of the end product, since it is eliminated in the process, but the smectite content must be less than 10%, since it negatively affects the properties of the sepiolite and the elimination yield thereof in the process is rather low. Once the mineral is selected, it is ground with a moisture content comprised between 30 and 40%, in successive steps, to a granulometry of less than 5 mm. The product thus treated is wetted with water, adding thereto the necessary amount of water so that the moisture content is comprised between 50 to 60%. This wetting must preferably be conducted for a period of time of up to 24 hours, although it can last longer. The ground and wetted sepiolite is moist dissociated by applying various consecutive dissociations to increase the yield of the product with a granulometry of less than 10 μm. The wet dissociated product is granulometrically classified by means of various hydrocycloning steps. The number of steps and hydrocyclone sizes will depend on the final granulometry and on the desired rheological grades. To conduct the hydrocycloning steps, it is necessary to work with solid concentrations of less than 10%. The use of higher concentrations would negatively affect the classification steps, since the rheological behaviour of the suspension to be classified reduces the effectiveness of the hydrocyclone. After classification, products having different granulometries and viscosities can be obtained. Usually, the granulometry is of less than 10 μm although products having elevated viscosities and granulometries of less than 74 μm can be obtained. The viscosities of the end product will vary, depending on the granulometry and purification of the sepiolite from 10 Pa.s to 34 Pa.s (Brookfield 5 rmp, 25°C in 6% aqueous solutions).

The concentration of the dissociated product can take place by centrifugation and in vacuo filtration. Once concentrated, a paste having a solids concentration of 45—55% can be obtained, which is cut and dried at a temperature below 110°C.

Process II

A rheological degree sepiolite can also be obtained by using, as the starting product, sepiolite or a sepiolite mineral having a sepiolite concentration above 50%. The most frequent contaminations are calcite, dolomite, feldspar, mica and quartz. The properties and the process are not affected thereby, but the smectite contamination must never be more than 20% of the mineral since, although the process purifies the sepiolite, the smectite elimination yield is low, and smectite contents above 20% in the end product affect the rheological grades of the product.

The mineral will be used with its moisture content after extraction, which is usually of from 30 to 40%. It is not recommendable to dry the mineral because it involves an unnecessary expense and because the product could be damaged during drying. The product is ground in successive steps to a granulometry of less than 2 mm. After grinding, water is added until the solids concentration of the suspension is of 5—25%.

A dispersing product is added to the suspension in an amount of from 0.5 to 3% based on the added sepiolite.

The dispersing agents used can be inorganic, such as, for example, alkali salts of hexametaphosphoric, tripolyphosphoric, pyrophosphoric acids and, in general, all the alkali salts of polyphosphoric acids. Polysilicates can also be used. Besides, mixtures of these dispersing agents with magnesium oxides or hydroxides can be used to improve the flow characteristics of the suspension.

The clay suspension is stirred with the dispersing agent, using a stirrer having a high shearing stress, for 5—15 minutes. This stirring can take place in two steps: in the first of which stirring is carried out with low revolutions for 2 to 7 minutes, and in the second with high revolutions for 2 to 8 minutes.

Once the bundles of sepiolite fibers are dissociated, the highest density fraction is separated by decantation or centrifugation. In this step, the mineral is purified until a product having a sepiolite content above 95% is obtained.

The supernatant is separated in a decanter or in a centrifuge and is passed to a stirrer to which a flocculating agent will be added. In this step the solids concentration will be in the range of from 5 to 15%.

The flocculating agent could be any magnesium salt or mixtures thereof. Calcium salts can also be used and, in general, any divalent cation soluble salt. Normally from 0.5—3% of the flocculating agent will be added. For example in the event tetrasodium pyrophosphate and magnesium sulphate are used, the molar ratio must be of 1:2.

The dispersed clay with the flocculating agent added thereto is stirred under the same conditions as those described in the dispersing process. After stirring, a pumpable sepiolite gel is obtained. This gel is introduced in a filter which concentrates the clay to a solids content of 45—55%. The filtered "cake" is cut and dried at a temperature below 110°C.

In the aforegoing processes, the moisture of the end product has no bearing on its properties, although it is always preferable to carry out dry grinding with a moisture of from 8 to 12%, to protect the sepiolite fiber from degradation which it undergoes to a lesser or greater degree during grinding. The dry product is triturated and ground until the desired granulometry is reached, depending on the application. Although in aqueous dispersions the wet granulometry of the product is independent of this grinding process and only depends on the wet grinding process, it can be of interest to obtain products having dry granulometries of less than 44 µm or even 10 µm. These products are suitable for dry mixing processes of sepiolite with other components having a given formula, or in processes in which the solvent is other than water. In these cases it is necessary to use a product having the dry granulometry required for each application.

If rheological grade sepiolite is to be used as the thicknening or suspending agent in aqueous media, it is not necessary to grind the dry paste, since the product dispersed in water will already have its granulometry. In this case, the wet paste is cut and extrusioned to obtain a product in the form of "churros" which is dried under the previously mentioned conditions. This product furthermore has two advantages, a higher rheological yield and a higher apparent density, apart from the fact that its dispersion in water poses no problems.

The characteristics of the product obtained in both cases are the following:

Dry-ground product:
Brookfield viscosity 5 rmp, 24°C,
  6% solids concentration        20—24 Pa.s.
Apparent density             80—100 g/l
Dispersibility (72 hours)      100%

Extrusioned product:
Brookfield viscosity 5 rmp, 24°C,
  6% solids concentration        31—33 Pa.s.
Apparent density             430—450 g/l
Dispersibility (72 hours)      100%

This range of products can form rather viscous suspensions at relatively low concentrations if compared with other clays; another important characteristic is the high dispersibility of the sepiolite particles in aqueous media and its high stability. Thus if a 3% rheological grade sepiolite is dispersed in water at 12,000 rmp (LOMI stirrer) for 5 minutes, no freeing of water will be observed 72 hours after initiating the preparation.

Process III

A sepiolite mineral having a sepiolite content of at least 50% is used as the starting product. It is not advisable for the mineral to be used to have a smectite contamination greater than 35%, feldspar, mica, quartz, other fibrous clay and carbonate contaminations not influencing this process.

The mineral is used with the moisture present after extraction which is normally not greater than 40%.

The product is ground in successive steps to a granulometry of less than 80 ASTM mesh. After grinding, water is added until the moisture of the mineral is of from 40 to 70%.

The mineral thus moistened is blended in a turbo-mixer for more than 1 minute, the duration of blending not having an upper limit since better rheological grades are obtained, the longer the duration thereof.

The properties of the end product can be improved, above all insofar as dispersibility, adding to the blending paste sodium carbonate in a percentage of up to 2% based on dry mineral.

After blending, the product can be formed or extruded at a low pressure, so that drying can take place more homogenously. This step is not necessary but it improves the handling of the product and the drying speed.

Drying can take place using any known system. The only condition for this process is that the mineral must not reach temperatures above 110°C.

Once dried, the product as obtained can either be used or it can be ground to the desired granulometric size. During grinding the moisture must necessarily be of from 8 to 12% to protect the structure of the product from degradations which would give rise to a reduction or a loss in the rheological grades, or to aging processes in the long run. If grinding does not take place or is slight, this consideration is not important. It any case, the decision of carrying out grinding will depend on the application of the product.

After grinding a granulometric classification can be carried out to obtain finer fractions. Classification becomes recommendable in those cases in which the application requires a small, dry granulometric size, either because the product must be dry-dosed or because it must be dispersed in low-polarity systems.

The characteristics of the product obtained according to this process can vary considerably, depending on the mineralogy and on the mixing time and moisture.

The invention will now be described with more detail making reference to specific examples, given merely by way of illustration and not limiting of the object of the invention.

Example 1

A 6% suspension and a 10% suspension of the product of the invention were prepared in different solvents, to determine the viscosity values. The results obtained are given in Table II:

TABLE II

| Solvent | Brookfield viscosity at 5 rpm (Pa.s) |
| --- | --- |
| Water(*) | 17.8 |
| Glycerine(**) | 48.0 |
| Triethanolamine(**) | 2.0 |
| Olive Oil(**) | 0.9 |
| Diactyle phthalate(**) | 5.2 |

(*) 6% Suspensions in LOMI at 12,000 r.p.m. for 5 minutes.
(**) 10% Suspensions in LOMI at 12,000 r.p.m. for 5 minutes.

Example 2

Table III compares the characteristics of the product of the invention with other inorganic gellants based on clays belonging to the Palygorskite group (ATTAGEL 50 and PHARMASORB COLLOIDAL), modified bentonites (BENTONE EW and BENTONE LT), synthetic hectorites (LAPONITE B and LAPONITE S) and asbestos-based products (SILODEX 24). Likewise, Figure 6 illustrates the viscosity of these products in water, depending on the solids concentration.

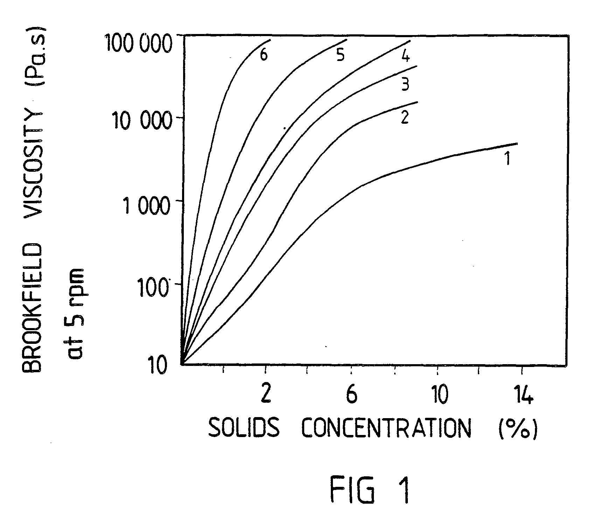

As it can be observed, the product of the invention can proportion suspensions having a much higher viscosity than that obtained with products based on clays of the same group, such as ATTAGEL 50 and PHARMASORB COLLOIDAL. Although the viscosity obtained with the product of the invention is lower than that obtained with modified bentonites and synthetic hectorites, the elevated cost of these products must necessarily be taken into consideration, wherefore the viscosity of these products can be made equal by merely increasing the concentration of the product of the invention, this substitution implying a substantial saving. As illustrated in Figure 1, wherein curves 1 to 6 represent:

1. Pharmasorb Colloidal
2. Attagel 50
3. Powdered sepiolite of the invention
4. "Noodle" sepiolite of the invention
5. Bentone EW
6. Bentone LT

## TABLE III

| Product Y | Mineral | Apparent density (g/l) | Moisture % | Dry granulometry (%) 10 μm | 44 μm | Syneresis (%) | Brookfield viscosity 5 rpm (Pa.s) | pH |
|---|---|---|---|---|---|---|---|---|
| A | Sepiolite | 440 | 5.9 | 5.4 | — | 0 | 32.8* | 8.5—9.0 |
| B | Sepiolite | 128 | 8.2 | 5.4 | — | 0 | 24.4* | 8.5—9.0 |
| Attagel 50 | Attapulgite | 338 | 8.3 | 5.0 | 1.7 | 50 | 5.4* | 8.0—8.5 |
| Pharmasorb Colloidal | Attapulgite | 267 | 7.0 | 12.4 | — | 44 | 1.2* | 8.0—8.5 |
| Bentone LT | Modified Bentonite | 510 | 6.0 | 31.0 | 10.0 | 0 | 48.0** | 8.5—9.0 |
| Bentone EW | Bentonite | 440 | 5.5 | — | — | 0 | 21.0** | 8.5—9.0 |
| Laponita B | Synthetic Hectorite | 948 | 8.0 | 1.2 | 6.6 | 0 | 11.0** | 8.5—9.0 |
| Laponita S | Synthetic Hectorite with Disp. | 956 | 3.5 | — | — | 0 | | 8.5—9.0 |
| Silodex 24 | Silica and Chrysotyle | 46 | 0.5 | 34.2 | 11.8 | 5 | 0.6** | 8.5—9.0 |

\* 6% solid suspensions
\*\* 3% solid suspensions
A="Noodle" product of the invention
B=Powdered product of the invention

EP 0 170 299 B1

## Example 3

1 Kg. of sepiolite mineral having a sepiolite content of 80%, a smectite lower than 5%, a feldspar and mica of 15%, with a moisture of 35% is grinded to a size of less than 2 mm., 450 m$^3$ of water are added thereto so that the moisture of the product is of 55%. The clay is left to macerate for 24 hours. After this period of time has elapsed, it is grinded in a jaw mill, adding 7.3 liters of water. The pulp is sieved through a 44 µm mesh and the sieving is concentrated by filtering on filter paper. The wet cake is dried at 100° until a moisture of 10% is reached and it is dissociated in a blade mill.

This product is dispersed in water having a solids concentration of 6%, using a Cowles type stirrer, at 2,700 rmp for 10 minutes. The characteristics of the gel thus formed are the following:

| | |
|---|---|
| Brookfield viscosity 5 rpm, 25°C | 21.5 Pa.s. |
| Syneresis | 0% |
| Granulometry | 90% 10 µm |

## Example 4

To 1 kg. of sepiolite mineral having a sepiolite content of 70%, a quartz of 10%, a feldspar of 10% and a smectite of 10%, and a granulometry of less than 200 mesh ASTM (75 µm), are added 4 liters of water in which 15 g of tetrasodium pyrophosphate have previously been dissolved. The suspension is stirred at 500 rpm for 5 minutes and then at 2,700 rpm for another 5 minutes.

The mineral dispersed is left to decant for 10 minutes and the supernatant is removed. To the supernatant there are added 20 g of magnesium sulphate and it is stirred at 500 rpm for 2 minutes and at 2,700 rpm for 8 minutes. A gel is formed from which the water is removed by in vacuo filtration on filter paper, until a cake having a solids concentration of 50% is obtained.

The cake is dried at 100°C to a moisture of 10%, it is cut and ground in a blade mill.

The powdered product is used to prepare a gel in water, stirring 6 g of product in 100 ml of water in a LOMI stirrer at 12,000 rpm for 10 minutes. The gel obtained has a Brookfield viscosity at 5 rpm and 25°C of 22.6 Pa.s.

## Example 5

The mineral of Example 4 was used repeating the same steps, but dispersing with 10 g of tetrasodium pyrophosphate and flocculating with 40 g of magnesium chloride.

In this case, the gel obtained upon dispersing 6 g of product in 100 ml of water in a LOMI stirrer at 12,000 rpm for 10 minutes, has a Brookfield viscosity at 6 rpm and 25°C of 24.0 Pa.s.

## Example 6

In this case, the procedure of Examples 4 and 5 was repeated, but dispersing with 10 g of tetrasodium pyrophosphate and flocculating with 50 g of calcium sulphate. The viscosity of the gel obtained under the same conditions as in the preceding Example was slightly lower, Brookfield viscosity at 5 rpm and 25°C, 8.6 Pa.s.

## Example 7

To 800 g of sepiolite material having a sepiolite content of 85%, ground to a particle size of less than 200 mesh ASTM (75 µm), there was added water until the moisture of the mass was of 41%. The mineral was blended in a 5 liter turbo-mixer for 5 minutes and 10 minutes. Samples of both these times were taken, drying them at 100°C for 4 hours until the moisture was of 12.3% and of 15.5% respectively. The dry product was dissociated in a blade mill and the rheological grades thereof were determined in water:

| Product | Brookfield viscosity 5 rpm, 25°C at a 6% solids concentration | Syneresis at 72 hours at a 3% solids concentration |
|---|---|---|
| 85% Sepiolite 41% moisture 5 mins. blending | 7.7 Pa.s | 50% |
| 85% Sepiolite 41% moisture 10 mins. blending | 8.9 Pa.s | 15% |

## Example 8

The procedure of Example 7 was repeated, using sepiolite mineral having a sepiolite content of 55%. The mineral was blended with 52% moisture for 20 minutes in a 5-liter turbo-mixer.

| Brookfield viscosity 5 rpm 25°C at a 6% solids concentration | Syneresis at 72 hours at a 3% solids concentration |
|---|---|
| 11.8 Pa.s | 5% |

Example 9

The raw material of Example 7 was used. Water was added so that the moisture was of 50%. The mineral was blended in a mixer for 5 minutes, the product being subjected to the treatment of Example 7 but being classified into two fractions, one above 10 μm and the other below.

| | Brookfield viscosity 5 rpm 25°C, at a 6% solids concentration | Syneresis 72 hours at a 3% solids concentration |
|---|---|---|
| Fraction below 10 μm | 21.2 Pa.s | 0% |
| Fraction above 10 μm | 15.6 Pa.s | 3% |

**Claims**

1. A process for the manufacture of the rheological grade sepiolite product, wherein a sepiolite mineral with a sepiolite clay mineral content higher than 50% is selectively extracted, the mineral is triturated with a humidity lower than 40% to a particle size smaller than 5 mm characterized in that the product thus obtained is wetted with such an amount of water as to achieve a humidity between 50 and 60%, the mineral is then wet-milled in order to disagglomerate the sepiolite fibre bundles, the solid concentration of the suspension being lower than 10%, it is then granulometrically classified by hydrocycloning and afterwards concentrated by centrifugation or filtration under vacuum to obtain a paste with a solid concentration of 45—55%, which paste is cut and dried at a temperature below 110°C until reaching a humidity lower than 20%.

2. A process according to claim 1, characterized in that the concentration of the product is carried out by centrifugation.

3. A process according to claim 1, characterized in that the concentration of the product is carried out by filtration under vacuum.

4. A process according to claim 1, characterized in that the concentrated paste is extruded before drying and it is afterwards dried at a temperature below 110°C to a humidity below 20%.

5. A process for the manufacture of the rheological grade sepiolite product wherein a sepiolite mineral with a sepiolite clay mineral content higher than 50% is selectively extracted, milled with a humidity below 40% until reaching a granulometry smaller than 2 mm characterized in that the product thus obtained is dispersed into water, wherein a dispersing agent has been dissolved in a 0.5—3% amount based on sepiolite, this dispersion being obtained with a solid concentration of 5—25%, the dispersion being carried out with stirring in order to cause disagglomeration of the bundles of sepiolite fibres, impurities are removed afterwards and the undispersed mineral is removed by centrifugation or decantation, the supernatant suspension is then flocculated by addition of a flocculating agent in an amount of 0.5 to 3% based on sepiolite to be flocculated, the suspension is then concentrated by filtration under vacuum until reaching a solid concentration between 45 and 55%, the obtained product is then cut and dried at a temperature below 110°C to a humidity lower than 20%.

6. A process according to claim 5, characterized in that the dispersing agent comprises alkaline salts of hexametaphosphoric, tripolyphosphoric, pyrophosphoric acids and, in general, alkaline salts of polyphosphoric acids, polysilicic acids or mixtures thereof, whereto magnesium oxide or hydroxide can be added.

7. A process according to claim 5, characterized in that the flocculating agent comprises magnesium salts, calcium salts or mixtures of these salts, or, in general, divalent cation soluble salts.

8. A process according to claim 5, characterized in that the concentrated paste is extruded before drying and then dried at a temperature below 110°C to a humidity lower than 20%.

9. A process for the manufacture of the rheological grade sepiolite product wherein a sepiolite polygorskite mineral with a content of these clays over 50% is selectively extracted, the mineral is milled with a humidity lower than 40% until reaching a granulometry smaller than 80 mesh ASTM (180 μm) characterized in that the mineral is wetted to a humidity between 40 and 70%, the mineral thus wetted being then kneaded in a pugmill or turbo-mixer for more than 1 minute, the kneaded product being subsequently dried at a temperature below 110°C.

10. A process according to claim 9, characterized in that, after kneading, the product is formed or extruded.

11. A process according to claims 9 and 10, characterized in that, after the drying process, the product is submitted to a milling process.

12. A process according to claims 9 to 11, characterized in that, after the milling process, the product is classified.

13. A process according to claim 10, characterized in that sodium carbonate is added at the kneading step in a percentage lower than 2% based on the dry mineral.

14. A rheological grade sepiolite product having a sepiolite content of at least 50% characterized in that it has a humidity of lower than 20%, is formed of particles having an acicular structure, obtained by drying at a temperature below 110°C, in which the particles constituting the sepiolite mineral are dissociated as a result of treatment by wet-milling or wet-kneading or with a dispersant, the major portion of the acicular particles having a length of less than 5 µm and capable of forming a random network in aqueous media, thereby to form a gel.

**Patentansprüche**

1. Verfahren zur Herstellung eines Sepiolithproduktes mit bestimmten Fliessvermögen in dem ein Sepiolithmineral mit einem Sepiolithmineralerdegehalt höher als 50% selektiv extrahiert wird, das Mineral mit einer Feuchtigkeit von weniger als 40% zu einer Partikelgrösse von weniger als 5 mm zerrieben wird, dadurch gekennzeichnet, dass das so erhaltene Produkt mit einer Menge von Wasser befeuchtet wird die genügend ist um eine Feuchtigkeit zwischen 50% und 60% zu erreichen, das Mineral dann feucht gemahlen wird um die Sepiolithfiberbündeln zu entbündeln, wobei die Feststoffkonzentration der Aufschlemmung geringer als 10% ist, das Mineral dann durch ein Hydrozyklon granulumetrisch getrennt wird und danach durch Zentrifugieren oder unter Vakuum Filtrieren konzentriert wird um einen Teig mit einer Feststoffkonzentration von 45% bis 55% zu erreichen, dieser Teig zerschnitten und bei einer Temperatur unter 110°C getrocknet wird, bis eine Feuchtigkeit von weniger als 20% erreicht wird.

2. Verfahren nach Anspruch 1, dadurch gekennzeichnet, dass das Konzentrieren des Produktes durch Zentrifugieren ausgeführt wird.

3. Verfahren nach Anspruch 1, dadurch gekennzeichnet, dass das Konzentrieren des Produktes durch unter Vakuum Filtrieren ausgeführt wird.

4. Verfahren nach Anspruch 1, dadurch gekennzeichnet, dass der konzentrierte Teig vor dem Trocknen extrudiert wird und danach bei einer Temperatur unter 110°C bis zu einer Feuchtigkeit von weniger als 20% getrocknet wird.

5. Verfahren zur Herstellung eines Sepiolithproduktes von bestimmten Fliessvermögen in dem ein Sepiolithmineral mit einem Sepiolithmineralerdegehalt höher als 50% selektiv extrahiert wird, mit einer Feuchtigkeit unter 40% gemahlen wird bis dass eine Partikelgrösse von weniger als 2 mm erreicht wird, dadurch gekennzeichnet, dass das so erhaltene Produkt in Wasser dispergiert wird, worin ein Dispergiermittel in einer Menge von 0,5 bis 3% bezogen auf Sepiolith, aufgelöst worden ist, diese Dispersion mit einer Feststoffkonzentration von 5 bis 25% erhalten wird, das Dispergieren unter Rühren ausgeführt wird um die Entbündelung der Sepiolithfiberbündel zu erreichen, Verunreinigungen nachher entfernt werden und nicht zerstreutes Mineral durch Zentrifugieren oder Dekantation entfernt wird, die obenliegende Suspension dann durch Zugabe eines Flockungsmittels, in einer Menge von 0,5 bis 3% auf das zu ausflockende Sepiolith bezogen, ausgeflockt wird, die Aufschlemmung dann durch unter Vakuum Filtration konzentriert wird bis ein Feststoffgehalt zwischen 45 und 55% erreicht wird, das erhaltene Produkt dann zerschnitten wird und bei einer Temperatur unter 110°C bis zu einer Feuchtigkeit von weniger als 20% getrocknet wird.

6. Verfahren nach Anspruch 5, dadurch gekennzeichnet, dass das Dispergiermittel alkaline Salze von Hexametaphosphor-, Tripolyphosphor- und Pyrophosphorsäure enthält und im allgemeinen alkaline Salze von Polyphosphorsäuren, Polykieselsäuren oder Mischungen derselben, wozu Magnesiumoxid oder -Hydroxid zugegeben werden kann.

7. Verfahren nach Anspruch 5, dadurch gekennzeichnet, dass das Flockungsmittel Magnesiumsalze, Kalziumsalze oder Mischungen dieser Salze enthält oder allgemein lösliche Salze divalenter Kationen.

8. Verfahren nach Anspruch 5, dadurch gekennzeichnet, dass der konzentrierte Teig vor dem Trocknen extrudiert wird und dann bei einer Temperatur von weniger als 110° bis zu einer Feuchtigkeit von weniger als 20% getrocknet wird.

9. Verfahren zur Herstellung eines Sepiolithproduktes von bestimmten Fliessvermögen in dem ein Sepiolith-Palygorskit Mineral mit einem Gehalt dieser Erden über 50% selektiv extrahiert wird, das Mineral mit einer Feuchtigkeit von weniger als 40% gemahlen wird bis eine Partikelgrösse von weniger als 80 Mesh ASTM (180 µm) erreicht wird, dadurch gekennzeichnet, dass das Mineral bis zu einer Feuchtigkeit zwischen 40 und 70% befeuchtet wird, das so befeuchtete Mineral dann in einem Mörtelmischer oder einem Turbomixer länger als eine Minute geknetet wird, das geknetete Produkt dann bei einer Temperatur unter 110°C getrocknet wird.

10. Verfahren nach Anspruch 9, dadurch gekennzeichnet, dass nach dem Kneten das Produkt geformt oder extrudiert wird.

11. Verfahren nach den Ansprüchen 9 und 10, dadurch gekennzeichnet, dass nach der Trocknung das Produkt zermahlen wird.

12. Verfahren nach den Ansprüchen 9 bis 11, dadurch gekennzeichnet, dass nach dem Zermahlen das Produkt aufgetrennt wird.

13. Verfahren nach Anspruch 10, dadurch gekennzeichnet, dass Natriumkarbonat während dem Knetschritt in einer Menge, die geringer als 2% bezogen auf das trockene Mineral ist, beigefügt wird.

14. Sepiolithprodukt mit bestimmten Fliessvermögen mit einem Sepiolithgehalt von mindestens 50%, dadurch gekennzeichnet, dass eine Feuchtigkeit von weniger als 20% aufweist, es von Partikeln die eine Nadelstruktur besitzten gebildet ist, erhalten durch Trocknen bei einer Temperatur unter 110°C, in welchem die das Sepiolithmineral bildende Partikel dissoziert sind infolge einer Behandlung durch Feuchtmahlen

# EP 0 170 299 B1

oder Feuchtkneten oder mit einem Dispergiermittel, wobei der grösste Teil der nadelförmigen Partikel eine Länge von weniger als 5 μm aufweisen und dazu fähig sind, in einem wässrigen Milieu ein regelloses Netz zu bilden und dadurch ein Gel zu bilden.

## Revendications

1. Procédé de fabrication d'un produit de sépiolite ayant un degré rhéologique déterminé dans lequel un minéral de sépiolite contenant plus de 50% d'argile minérale de sépiolite est extrait sélectivement, le minéral est trituré avec une humidité inférieure à 40% jusqu'à obtenir une taille de particules inférieure à 5 mm, caractérisé en ce que le produit ainsi obtenu est mouillé avec une quantité d'eau telle qu'on obtienne une humidité comprise entre 50 et 60%, le minéral est ensuite moulu par voie humide pour désagglomérer les faisceaux de fibres de sépiolite, la concentration en solide de la suspension étant inférieure à 10%, il est ensuite trié selon sa granulométrie par un séparateur hydrocyclonique et ensuite concentré par centrifugation ou filtration sous vide pour obtenir une pâte ayant une concentration en solide de 45 à 55%, ladite pâte est découpée et séchée à une température inférieure à 110°C jusqu'à atteindre une humidité inférieure à 20%.

2. Procédé selon la revendication 1, caractérisé en ce que le produit est concentré par centrifugation.

3. Procédé selon la revendication 1, caractérisé en ce que le produit est concentré par filtration sous vide.

4. Procédé selon la revendication 1, caractérisé en ce que la pâte concentrée est extrudée avant le séchage et qu'elle est ensuite séchée à une température inférieure à 110°C jusqu'à une humidité inférieure à 20%.

5. Procédé de fabrication d'un produit de sépiolite ayant un degré rhéologique déterminé dans lequel un minéral de sépiolite ayant une teneur en argile minérale de sépiolite supérieure à 50% est extrait sélectivement, moulu avec une humidité inférieure à 40% jusqu'à atteindre une granulométrie inférieure à 2 mm, caractérisé en ce que le produit ainsi obtenu est dispersé dans de l'eau, dans laquelle un agent dispersant à été dissout à une concentration de 0,5 à 3% rapportée à la sépiolite, cette dispersion étant obtenue avec une concentration en solide de 5 à 25%, la dispersion étant effectuée sous agitation dans le but de désagglomérer les faisceaux de fibres de sépiolite, que les impurtés sont enlevées ensuite et que le minéral non dispersé est enlevé par centrifugation ou décantation, que la suspension surnageante est ensuite floculée en ajoutant un agent floculant à une concentration de 0,5 à 3% rapportée à la sépiolite devant être floculée, que la suspension est ensuite concentrée par filtration sous vide jusqu'à atteindre une concentration en solide entre 45 et 55%, que le produit obtenu est ensuite découpé et séché à une température inférieure à 110°C jusqu'à une humidité inférieure à 20%.

6. Procédé selon la revendication 5, caractérisé en ce que l'agent dispersant comprend des sels alcalins d'acides hexamétaphosphorique, tripolyphosphorique ou pirophosphorique et, en général, des sels alcalins d'acides polyphosphoriques, polysilysiliques ou leurs mélanges, auxquels de l'oxyde ou de l'hydroxyde de magnésium peut être ajouté.

7. Procédé selon la revendication 5, caractérisé en ce que l'agent floculant comprend des sels de magnésium, des sels de calcium ou des mélanges de ces sels ou en général des sels solubles de cations divalents.

8. Procédé selon la revendication 5, caractérisé en ce que la pâte concentrée est extrudée avant le séchage et ensuite séchée à une température inférieure à 110°C jusqu'à une humidité inférieure à 20%.

9. Procédé de fabrication d'un produit de sépiolite ayant un degré rhéologique déterminé, dans lequel un minéral de sépiolite-palygorskite avec une teneur en ces argiles supérieure à 50% est sélectivement extrait, le minéral est moulu avec une humidité inférieure à 40% jusqu'à atteindre une granulométrie inférieure à 80 mesh ASTM (180 μm), caractérisé en ce que le minéral est mouillé jusqu'à une humidité comprise entre 40 et 70%, le minéral ainsi mouillé étant ensuite pétri dans un malaxeur ou un turbo-mixeur pendant plus d'une minute, le produit pétri étant ensuite séché à une température inférieure à 110°C.

10. Procédé selon la revendication 9, caractérisé en ce que après le pétrissage le produit est formé ou extrudé.

11. Procédé selon les revendications 9 ou 10, caractérisé en ce que après le séchage le produit est soumis à une mouture.

12. Procédé selon les revendications 9 à 11, caractérisé en ce que après la mouture le produit est trié.

13. Procédé selon la revendication 10, caractérisé en ce que du carbonate de sodium est ajouté pendant l'étape de pétrissage à un pourcentage inférieur à 2% rapporté au minéral sec.

14. Produit de sépiolite ayant un degré rhéologique déterminé, ayant une teneur en sépiolite d'au moins 50%, caractérisé en ce qu'il a une humidité inférieure à 20%, est formé de particules ayant une structure ciculaire, est obtenu par séchage à une température inférieure à 110°C, dans lequel les particules constituant le minéral de sépiolité sont dissociées, ceci résultant d'un traitement par mouture par voie humide ou par pétrissage par voie humidie ou à l'aide d'un dispersant, la majeure partie des particules aciculaires ayant une longueur inférieure à 5 μm et étant capables de former un réseau aléatoire dans un milieu acqueuse, en formant ainsi un gel.

FIG 1